# EUROPEAN PATENT APPLICATION

(11) **EP 4 650 689 A1**
(43) Date of publication of application: **19.11.2025**
(21) Application number: 25719948.9
(22) Date of filing: 28.03.2025
(51) Int. Cl.: F25B 45/00, B01J 20/02, C09K 5/04, F25B 1/00

(54) **REFRIGERANT DISCHARGE DEVICE AND REFRIGERANT DISCHARGE METHOD**

(30) Priority: 29.03.2024 JP 2024057725
(71) Applicant: DAIKIN INDUSTRIES, LTD., Osaka-Shi, Osaka 530-0001 (JP)
(72) Inventor: KONDO, Shigenori, Osaka-shi, Osaka 530-0001 (JP); MINAMIDA, Tomoatsu, Osaka-shi, Osaka 530-0001 (JP); KUMAKURA, Eiji, Osaka-shi, Osaka 530-0001 (JP); IWATA, Ikuhiro, Osaka-shi, Osaka 530-0001 (JP); NAKAYAMA, Kazuhiro, Osaka-shi, Osaka 530-0001 (JP); TANAKA, Masaki, Osaka-shi, Osaka 530-0001 (JP)
(74) Representative: Hoffmann Eitle
(86) International application number: PCT/JP2025/012916
(87) International publication number: WO 2025/206358

(57) **Abstract**

A refrigerant discharge apparatus 100 discharges a refrigerant from a refrigeration apparatus 1 including a refrigerant circuit 10 that encloses the refrigerant and an odor component and circulates the refrigerant and the odor component. The refrigerant discharge apparatus 100 includes a main body 111 configured to accommodate a substance 101 that captures the odor component. The refrigerant discharge apparatus 100 includes an introduction port 112 connected to the main body 111 and configured to introduce, into the main body 111, the refrigerant and the odor component discharged from the refrigeration apparatus; and a discharge port 113 provided at a position different from that of the introduction port 112 in the main body 111, and configured to discharge the refrigerant from the main body 111 to an outside of the main body 111.

## Description

### TECHNICAL FIELD

The present disclosure relates to a refrigerant discharge apparatus and a refrigerant discharge method.

### BACKGROUND ART

Conventionally, refrigeration apparatuses in which a highly flammable refrigerant having a low global warming potential (GWP) value is enclosed in a refrigerant circuit are known. In such a refrigeration apparatus, it is important to recognize leakage of a refrigerant from a refrigerant circuit at an early stage and avoid combustion of the refrigerant.

Patent Document 1 discloses a refrigeration cycle device in which, in addition to a refrigerant, an odor component that is a sulfur-based odorant is enclosed in a refrigerant circuit. If the refrigerant leaks from the refrigerant circuit, the odor component leaks together with the refrigerant, thereby allowing surrounding people to recognize an abnormality and take necessary measures.

### RELATED-ART DOCUMENTS

### PATENT DOCUMENTS

Patent Document 1: Japanese Patent No. 7162786

### SUMMARY OF THE INVENTION

### PROBLEM TO BE SOLVED BY THE INVENTION

When maintenance or inspection including removal of a refrigeration apparatus, replacement or repair of pipes, or the like is performed, an operator may perform refrigerant extraction work of extracting an enclosed refrigerant from the refrigerant circuit. A refrigerant having a low GWP value can be discharged from the refrigerant circuit to the outside of the refrigerant circuit such as the atmosphere. However, in a case where an odor component is enclosed in the refrigerant circuit, the odor component is also discharged to the outside. If the odor component is discharged to the outside of the refrigeration apparatus, inconveniences may occur, such as surrounding people, who do not know the situation, recognizing an abnormality and feeling discomfort.

The present disclosure provides a technique by which discharge of an odor component can be suppressed when a refrigerant is discharged from a refrigeration apparatus.

### MEANS TO SOLVE THE PROBLEM

A first aspect of the present disclosure is a refrigerant discharge apparatus for discharge of a refrigerant from a refrigeration apparatus, the refrigeration apparatus including a refrigerant circuit that encloses the refrigerant and an odor component and circulates the refrigerant and the odor component. The refrigerant discharge apparatus includes: a main body configured to accommodate a substance that captures the odor component; an introduction port connected to the main body and configured to introduce, into the main body, the refrigerant and the odor component discharged from the refrigeration apparatus; and a discharge port provided at a position different from that of the introduction port in the main body, and configured to discharge the refrigerant from the main body to an outside of the main body.

According to the above, the refrigerant discharge apparatus can introduce the refrigerant and the odor component from the refrigeration apparatus into the main body, and stably capture the odor component with the substance in the main body. Accordingly, the refrigerant discharge apparatus can suppress discharge of the odor component when the refrigerant is discharged from the refrigeration apparatus. As a result, it is possible to prevent diffusion of the odor component into the surroundings during refrigerant extraction work, thereby avoiding inconveniences such as surrounding people recognizing an abnormality and feeling discomfort.

Further, the introduction port is connected to a service port of the refrigeration apparatus.

Accordingly, an operator can easily attach the refrigerant discharge apparatus to the refrigeration apparatus and cause the refrigerant and the odor component enclosed in the refrigerant circuit to flow into the main body.

Further, the refrigerant discharge apparatus includes a hose connecting between the introduction port and the service port.

Accordingly, the degree of freedom in placing the main body during the refrigerant extraction work can be increased, and thus the operator can place the main body at an appropriate position.

Further, the refrigerant discharge apparatus includes a tank connected to the discharge port and configured to collect the refrigerant discharged from the discharge port.

Accordingly, discharge of the refrigerant in the refrigeration apparatus to the atmosphere can be reduced in the refrigerant extraction work.

Further, the refrigerant discharge apparatus includes a separation unit and a cooling unit provided either as the main body or between the introduction port and the main body, or both, wherein the refrigerant, the odor component, and a refrigerating machine oil flow into the separation unit, and the separation unit separates the refrigerant, the odor component, and the refrigerating machine oil into liquid and gas, and the cooling unit cools the refrigerant, the odor component, and the refrigerating machine oil.

Accordingly, even when the refrigerant, the odor component, and the refrigerating machine oil are discharged, the refrigerant discharge apparatus can separate and discharge the refrigerating machine oil in a favorable manner. That is, the refrigerant discharge apparatus can reduce the amount of the odor component discharged to the outside of a closed system (to the outside, a refrigerant collection apparatus, or the like) together with the refrigerant by separating the odor component from the gaseous refrigerant in the separation unit.

Further, the substance is an adsorbent configured to adsorb the odor component.

Accordingly, the substance can stably adsorb the odor component flowing into the main body. Further, the operator can easily handle the refrigerant discharge apparatus, and the efficiency of the refrigerant extraction work can be facilitated.

Further, the substance is a catalyst that converts the odor component into an odorless component.

Accordingly, the substance can stably convert the odor component, which has flowed into the main body, into an odorless component.

Further, the substance is a liquid stored in the main body, the odor component passes through the liquid by being introduced from the introduction port.

Accordingly, the refrigerant discharge apparatus can sufficiently capture the odor component while the odor component passes through the substance that is a liquid.

Further, the substance is an oxidizing agent that oxidizes the odor component so as to convert the odor component into an odorless component.

Accordingly, the substance can stably convert the odor component, which has flowed into the main body, into an odorless component.

Further, a Hansen solubility parameter distance between the substance and the odor component is 10 or less.

Accordingly, the refrigerant discharge apparatus can sufficiently dissolve the odor component in the substance that is a liquid, and can prevent the odor component from being discharged from the substance.

Further, the refrigerant is a highly flammable refrigerant.

Accordingly, the refrigerant discharge apparatus can discharge the highly flammable refrigerant with a reduced amount of the odor component, and the operator can safely perform the refrigerant extraction work.

Further, the refrigerant is a refrigerant containing a hydrocarbon as a main component.

Accordingly, even when the refrigerant is discharged in the refrigerant extraction work, environmental pollution can be avoided.

Further, the odor component contains, as a component, one or more of tetrahydrothiophene, dimethyl sulfide, ethyl methyl sulfide, and cyclohexene.

Accordingly, if the refrigerant leaks from the refrigerant circuit, the refrigeration apparatus allows a person to smoothly recognize the leakage of the refrigerant by the odor component. Further, the refrigerant discharge apparatus can stably capture the odor component.

A second aspect of the present disclosure is a refrigerant discharge method of discharging a refrigerant from a refrigeration apparatus, the refrigeration apparatus including a refrigerant circuit that encloses the refrigerant and an odor component and circulates the refrigerant and the odor component. The refrigerant discharge method includes: a connection step of directly or indirectly connecting an introduction port of a refrigerant discharge apparatus to the refrigeration apparatus; and a discharge step of introducing the refrigerant and the odor component from the refrigeration apparatus into a main body of the refrigerant discharge apparatus through the introduction port, capturing the odor component by a substance accommodated in the main body, and subsequently discharging the refrigerant to an outside of the main body from a discharge port provided at a position different from that of the introduction port in the main body.

According to the above, the refrigerant discharge method according to the second aspect can suppress discharge of the odor component when the refrigerant is discharged from the refrigeration apparatus.

A third aspect of the present disclosure is a refrigerant discharge method of discharging a refrigerant from a refrigeration apparatus, the refrigeration apparatus including a refrigerant circuit that encloses the refrigerant, an odor component, and a refrigerating machine oil and circulates the refrigerant and the odor component. The refrigerant discharge method includes: in discharging the refrigerant, the odor component, and the refrigerating machine oil from the refrigeration apparatus, a cooling step of cooling the refrigerant, the odor component, and the refrigerating machine oil; a separation step of separating a gas including the refrigerant and the odor component from the refrigerating machine oil; and an adsorption step of adsorbing, by a substance, the odor component included in the refrigerant or the refrigerating machine oil after at least one of the cooling step or the separation step is performed.

According to the above, the refrigerant discharge method according to the third aspect can suppress discharge of the odor component when the refrigerant is discharged from the refrigeration apparatus.

### BRIEF DESCRIPTION OF THE DRAWINGS

[FIG. 1] FIG. 1 is a drawing schematically illustrating a configuration of an air conditioner with which a refrigerant discharge apparatus according to an embodiment is used;
[FIG. 2] FIG. 2 is a drawing illustrating installation states of service ports of an outdoor unit;
[FIG. 3] FIG. 3 is a cross-sectional view illustrating an example of a first closing valve and a gas service port of a refrigerant circuit;
[FIG. 4] FIG. 4 is a drawing schematically illustrating a connection state between a refrigerant discharge apparatus according to a first embodiment and an air conditioner;
[FIG. 5] FIG. 5 is a flowchart illustrating a refrigerant discharge method;
[FIG. 6] FIG. 6 is a drawing illustrating refrigerant extraction work according to a modification;
[FIG. 7] FIG. 7 is a drawing schematically illustrating a connection state between a refrigerant discharge apparatus according to a second embodiment and the air conditioner;
[FIG. 8] FIG. 8 is a graph illustrating Hansen solubility parameters when an odor component is tetrahydrothiophene; and
[FIG. 9] FIG. 9 is a drawing schematically illustrating a refrigerant discharge apparatus according to a third embodiment.

### MODE FOR CARRYING OUT THE INVENTION

Embodiments of the present disclosure will be described below with reference to the drawings. In the drawings, the same components are denoted by the same reference numerals, and a duplicate description thereof may be omitted. In the drawings, dimensions, ratios, or numbers may be exaggerated or simplified as necessary for ease of understanding of the present invention.

### <Configuration of Refrigeration Apparatus>

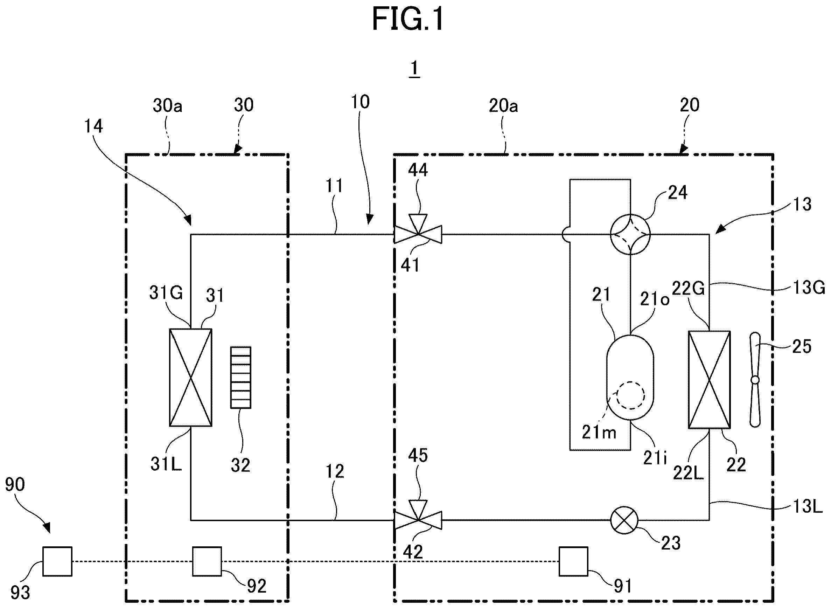

A refrigerant discharge apparatus 100 according to an embodiment of the present disclosure is an apparatus used to discharge a refrigerant from a refrigeration apparatus 1. Therefore, the refrigeration apparatus 1 will be described first with reference to FIG. 1. The refrigeration apparatus 1 according to the embodiment is an air conditioner that adjusts the temperature of air in an indoor space. The refrigeration apparatus 1 is hereinafter also referred to as an air conditioner 1.

The air conditioner 1 is used for a cooling operation and a heating operation of the indoor space by performing a vapor compression refrigeration cycle operation. In the cooling operation, the air conditioner 1 cools the air in the indoor space to adjust the temperature. In the heating operation, the air conditioner 1 heats the air in the indoor space to adjust the temperature.

The air conditioner 1 includes a refrigerant circuit 10 enclosing a refrigerant, an outdoor unit 20 that is a heat source unit installed in an outdoor space, and an indoor unit 30 that is a utilization unit installed in the indoor space. The refrigerant circuit 10 performs the cooling operation and the heating operation by circulating the refrigerant between the outdoor unit 20 and the indoor unit 30. The air conditioner 1 according to the embodiment is of a pair type in which one outdoor unit 20 and one indoor unit 30 are connected. However, the air conditioner 1 may have a configuration in which one outdoor unit 20 and a plurality of indoor units 30 are connected, or a configuration in which a plurality of outdoor units 20 and one indoor unit 30 are connected.

The refrigerant circuit 10 includes a first connection pipe 11 and a second connection pipe 12, which connect the outdoor unit 20 and the indoor unit 30. The first connection pipe 11 and the second connection pipe 12 are one or more tubes that connect the indoor space and the outdoor space so as to circulate the refrigerant. The first connection pipe 11 is one or more gas pipes that circulates the refrigerant in a gaseous state. The second connection pipe 12 is one or more liquid pipes that circulate the refrigerant in a liquid state.

Further, the refrigerant circuit 10 includes an outdoor path 13 coupled to one end of the first connection pipe 11 and one end of the second connection pipe 12 within the outdoor unit 20. Further, the refrigerant circuit 10 includes an indoor path 14 coupled to the other end of the first connection pipe 11 and the other end of the second connection pipe 12 within the indoor unit 30. The refrigerant circuit 10 forms an endless circulation circuit by the first connection pipe 11, the second connection pipe, the outdoor path 13, and the indoor path 14.

### <Outdoor Unit>

The outdoor unit 20 constitutes part of the refrigerant circuit 10 by having the outdoor path 13 inside a housing 20a. The outdoor unit 20 includes a compressor 21, an outdoor heat exchanger 22, an expansion valve 23, a four-way switching valve 24, and an outdoor fan 25. The compressor 21, the outdoor heat exchanger 22, the expansion valve 23, and the four-way switching valve 24 are connected to the outdoor path 13 of the outdoor unit 20.

In the refrigeration cycle operation, the compressor 21 compresses a low-pressure refrigerant taken in from a suction connection end 21i so as to increase the pressure of the low-pressure refrigerant, and discharges a high-pressure refrigerant from a discharge connection end 21o. As the compressor 21, for example, a rotary device can be used to increase the pressure of the refrigerant by rotationally driving a sealed compression element by a compressor motor 21m. The suction connection end 21i and the discharge connection end 21o of the compressor 21 are connected to the four-way switching valve 24 through the outdoor path 13.

The outdoor heat exchanger 22 radiates the heat of the refrigerant by performing heat exchange between the refrigerant circulating inside and outdoor air in the refrigeration cycle operation during the cooling operation. As the outdoor heat exchanger 22, for example, a fin-and-tube mechanism can be used. A gas connection end 22G of the outdoor heat exchanger 22 is connected to the four-way switching valve 24 through the outdoor path 13. A liquid connection end 22L of the outdoor heat exchanger 22 is connected to the expansion valve 23 through the outdoor path 13.

The outdoor fan 25 blows outdoor air to the outdoor heat exchanger 22. As the outdoor fan 25, for example, a propeller fan including a motor (not illustrated) and a propeller can be used.

The expansion valve 23 reduces the pressure of the refrigerant flowing through the outdoor path 13 so as to reduce the temperature of the refrigerant. As the expansion valve 23, an electronic valve or a temperature-sensitive valve that adjusts the opening degree of an internal flow path can be used. The expansion valve 23 may be provided in the indoor unit 30.

The four-way switching valve 24 reverses the flow of the refrigerant in the refrigerant circuit 10 forward and backward in order to selectively perform the cooling operation and the heating operation. The four-way switching valve 24 can be switched between a first state indicated by solid lines in FIG. 1 and a second state indicated by broken lines in FIG. 1.

Specifically, in the first state, the four-way switching valve 24 causes the discharge connection end 21o of the compressor 21 to communicate with the gas connection end 22G of the outdoor heat exchanger 22, and also causes the suction connection end 21i of the compressor 21 to communicate with the external first connection pipe 11 of the outdoor unit 20. In the first state, the refrigerant flows from the first connection pipe 11 into the outdoor path 13 of the outdoor unit 20 based on the driving of the compressor 21. The refrigerant is compressed by the compressor 21 to have a high pressure, and moves to the outdoor heat exchanger 22 through the four-way switching valve 24. The refrigerant releases its heat in the outdoor heat exchanger 22, and further, the pressure of the refrigerant is reduced by the expansion valve 23. As a result, the refrigerant becomes a low-pressure, low-temperature liquid, and moves to the second connection pipe 12. That is, the air conditioner 1 can perform the cooling operation by drawing a high-temperature refrigerant via the first connection pipe 11 and sending a low-temperature refrigerant to the indoor unit 30 via the second connection pipe 12.

Further, in the second state, the four-way switching valve 24 causes the discharge connection end 21o of the compressor 21 to communicate with the external first connection pipe 11 of the outdoor unit 20, and also causes the suction connection end 21i of the compressor 21 to communicate with the gas connection end 22G of the outdoor heat exchanger 22. In the second state, the refrigerant flows from the second connection pipe 12 into the outdoor path 13 of the outdoor unit 20 based on the driving of the compressor 21. The refrigerant moves to the outdoor heat exchanger 22 through the expansion valve 23, and further moves from the outdoor heat exchanger 22 to the compressor 21. The refrigerant is compressed by the compressor 21 so as to become a high-pressure, high-temperature gas, and moves to the first connection pipe 11 through the four-way switching valve 24. That is, the air conditioner 1 can perform the heating operation by drawing a low-temperature refrigerant via the second connection pipe 12 and sending a high-temperature refrigerant to the indoor unit 30 via the first connection pipe 11.

Further, the outdoor path 13 of the outdoor unit 20 can be divided into a gas line 13G that mainly circulates a gaseous refrigerant and a liquid line 13L that mainly circulates a liquid refrigerant. The gas line 13G of the outdoor path 13 refers to a pipe that connects a connection point with the first connection pipe 11 to the compressor 21 and to the gas connection end 22G of the outdoor heat exchanger 22. The liquid line 13L of the outdoor path 13 refers to a pipe that connects a connection point with the second connection pipe 12 to the expansion valve 23 and to the liquid connection end 22L of the outdoor heat exchanger 22. The gas line 13G and the liquid line 13L are provided with a plurality of valves. Examples of the plurality of valves include a first closing valve 41 and a second closing valve 42.

The gas line 13G between the connection point with the first connection pipe 11 and the compressor 21 is provided with the first closing valve 41. Specifically, the first closing valve 41 is provided at the connection point between the gas line 13G and the first connection pipe 11. The first closing valve 41 opens and closes the flow path of the gas line 13G based on an operation of an operator.

The liquid line 13L between the connection point with the second connection pipe 12 and the expansion valve 23 is provided with the second closing valve 42. Specifically, the second closing valve 42 is provided at the connection point between the liquid line 13L and the second connection pipe 12. The second closing valve 42 opens and closes the flow path of the liquid line 13L based on an operation of the operator.

The first closing valve 41 has a gas service port 44. The second closing valve 42 has a liquid service port 45. The gas service port 44 is larger than the liquid service port 45. The gas service port 44 and the liquid service port 45 are used to fill the refrigerant circuit 10 of the air conditioner 1 with the refrigerant, discharge the refrigerant from the outdoor unit 20, measure the pressure of the refrigerant in the refrigerant circuit 10, and the like.

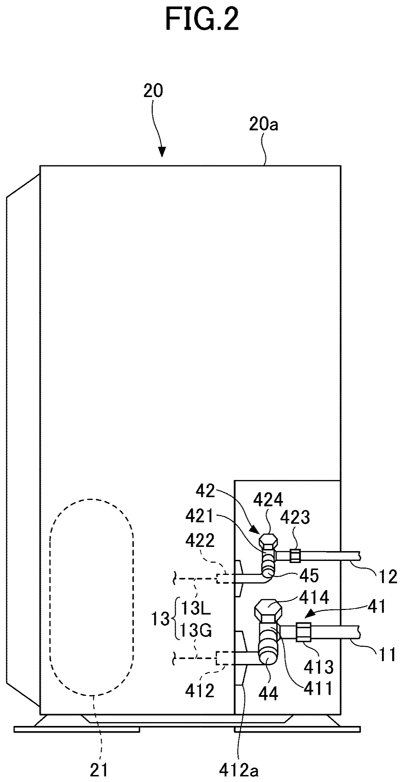

As illustrated in FIG. 2, the housing 20a of the outdoor unit 20 has a closing valve arrangement space therein. The first closing valve 41 and the second closing valve 42 are provided in the closing valve arrangement space of the housing 20a. The first closing valve 41 is a connector connected to the first connection pipe 11. The second closing valve 42 is a connector connected to the second connection pipe 12.

The first closing valve 41 includes a base 411, an outdoor connector 412, a connection pipe connector 413, a valve operation part 414, and the gas service port 44. The outdoor connector 412, the connection pipe connector 413, the valve operation part 414, and the gas service port 44 protrude from the base 411 in mutually different directions.

The outdoor connector 412 is connected to a pipe of the gas line 13G of the outdoor path 13 disposed in the housing 20a. Further, a fixing mechanism 412a that fixes the first closing valve 41 to the housing 20a of the outdoor unit 20 is provided on the outer peripheral surface of the outdoor connector 412. The first closing valve 41 is fixed to the housing 20a via the fixing mechanism 412a.

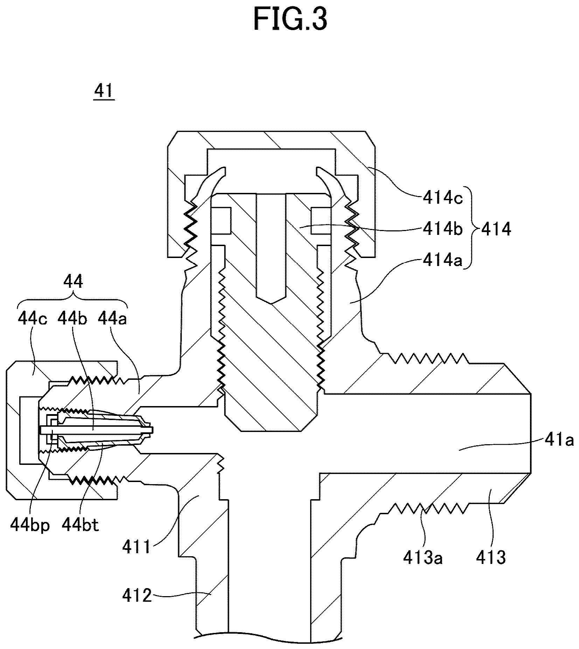

The connection pipe connector 413 is connected to the first connection pipe 11 provided outside the outdoor unit 20. As illustrated in FIG. 3, the connection pipe connector 413 has a screw thread 413a on the outer peripheral surface thereof, and the first closing valve 41 and the first connection pipe 11 are coupled by engaging a nut (not illustrated) at one end of the first connection pipe 11 with the screw thread 413a.

The valve operation part 414 is a mechanism for opening and closing a flow path 41a of the first closing valve 41 by manual operation of the operator. The valve operation part 414 includes a cylindrical protruding part 414a integrally formed with the base 411, a valve rod 414b provided in the cylindrical protruding part 414a, and a cap 414c detachably attachable to the cylindrical protruding part 414a. The valve operation part 414 covers the valve rod 414b by engaging the cap 414c with the cylindrical protruding part 414a except when opening and closing operations are performed.

The valve rod 414b has an operation hole along the axial direction from the head portion. The operator inserts an operation tool such as a wrench into the operation hole and rotates the valve rod 414b so as to move the valve rod 414b forward and backward in the base 411. The operator can close the flow path 41a of the first closing valve 41 by advancing the valve rod 414b into the base 411. Conversely, the operator can open the flow path 41a of the first closing valve 41 by retracting the valve rod 414b from the inside of the base 411.

The gas service port 44 is a connector to which a control valve (not illustrated) can be connected. The gas service port 44 is in a shutoff state when the control valve is not connected. The control valve is connected by the operator, and the gas service port 44 is switched between communication with and shutoff from the flow path 41a of the first closing valve 41 in accordance with the opening and closing of the control valve. Specifically, the gas service port 44 includes a cylindrical protruding part 44a integrally formed with the base 411, a valve core 44b accommodated in the cylindrical protruding part 44a, and a cap 44c detachably attachable to the cylindrical protruding part 44a. The gas service port 44 covers the valve core 44b by engaging the cap 44c with the cylindrical protruding part 44a except when an external device is connected.

The valve core 44b includes a pin 44bp that is pushed by the control valve when an external device is attached to the cylindrical protruding part 44a, and a cylindrical body 44bt that is opened and closed in accordance with the displacement of the pin 44bp. Upon the pin 44bp being pushed by the control valve, the cylindrical body 44bt is opened, and the external device and the flow path 41a communicate with each other. Upon the pin 44bp being released by the control valve, the pin 44bp is returned to the original position by a spring (not illustrated), and the cylindrical body 44bt closes the flow path 41a, thereby causing the flow path 41a to be shut off from the outside.

As illustrated in FIG. 2, the second closing valve 42 also includes a base 421, an outdoor connector 422, a connection pipe connector 423, a valve operation part 424, and the liquid service port 45. The configuration of the second closing valve 42 is substantially the same as that of the first closing valve 41, and thus a description thereof will be omitted.

### <Indoor Unit>

Referring back to FIG. 1, the indoor unit 30 constitutes part of the refrigerant circuit 10 by including the indoor path 14 inside a housing 30a. The indoor unit 30 includes an indoor heat exchanger 31 and an indoor fan 32. The indoor heat exchanger 31 is connected to the indoor path 14 of the indoor unit 30.

The indoor heat exchanger 31 exchanges heat between indoor air and the refrigerant circulating inside during the refrigeration cycle operation. Thus, the indoor heat exchanger 31 can take heat from the indoor air and cool the indoor air when the refrigerant has a lower temperature than the indoor air, and the indoor heat exchanger 31 can also release heat to the indoor air and warm the indoor air when the refrigerant has a higher temperature than the indoor air. As the indoor heat exchanger 31, for example, a fin-and-tube type mechanism can be used. A gas connection end 31G of the indoor heat exchanger 31 is connected to the first connection pipe 11 through the indoor path 14. A liquid connection end 31L of the indoor heat exchanger 31 is connected to the second connection pipe 12 through the indoor path 14.

The indoor fan 32 blows the indoor air to the indoor heat exchanger 31. As the indoor fan 32, for example, a cross flow fan including a motor (not illustrated) and a cylindrical impeller can be used. The indoor air conveyed by the indoor fan 32 passes through the indoor heat exchanger 31 and is blown from the indoor heat exchanger 31 into the indoor space.

Further, the indoor unit 30 includes a power source circuit connected to a commercial power source. The air conditioner 1 operates the indoor unit 30 based on power supplied from the commercial power source, and operates the outdoor unit 20 via a power line (not illustrated).

### <Control Unit of Air Conditioner>

The air conditioner 1 includes a control unit 90 that controls the operation of each component. The control unit 90 includes a first control device 91, a second control device 92, and a remote controller 93. The remote controller 93 is a device with which a user inputs various instructions to the air conditioner 1, and may be a dedicated controller or a portable terminal such as a smartphone or tablet.

Each of the first control device 91, the second control device 92, and the remote controller 93 is a computer (more specifically, a micro control unit (MCU)) including a processor, a memory, an input/output interface, and a communication interface. The processor is a combination of one or more of a central processing unit (CPU), a graphics processing unit (GPU), an application specific integrated circuit (ASIC), a field-programmable gate array (FPGA), and a circuit including a plurality of discrete semiconductors. The memory includes a nonvolatile memory and a volatile memory. The memory stores a program that controls various processes, and the processor controls various operations by reading out and executing the program stored in the memory.

The first control device 91 is provided in the outdoor unit 20 and controls each component of the outdoor unit 20. The second control device 92 is provided in the indoor unit 30 and controls each component of the indoor unit 30. The first control device 91 and the second control device 92 can transmit and receive information to and from each other by wired communication or wireless communication. The second control device 92 and the remote controller 93 can transmit and receive information to and from each other by wired communication or wireless communication. The control unit 90 selectively executes the cooling operation or the heating operation according to an operation command from the user via the remote controller 93.

### <Refrigerant>

As a refrigerant enclosed in the refrigerant circuit 10, a refrigerant having a GWP value as low as possible and having a small load on the environment is preferably selected. Examples of such refrigerant include refrigerants containing, as main components, hydrocarbons having one to four carbon atoms such as R-290 (propane), R-1270 (propylene), and R-600a (isobutane). The above materials of the refrigerants are highly flammable refrigerants having higher combustibility than hydrofluorocarbons. In the present embodiment, an example in which propane is applied as a refrigerant will be described. Note that the refrigerant may be methane (R50), ethane (R170), butane (R600), ammonia (R717), or the like.

### <Odor Component>

As described above, an odor component is enclosed in the air conditioner 1 together with the refrigerant such that a person can recognize leakage of the highly flammable refrigerant from the refrigerant circuit 10. Examples of the odor component include a sulfur-based odorant that is a sulfur-based compound. Examples of the sulfur-based odorant include: sulfide-based odorants such as tetrahydrothiophene (THT), dimethyl sulfide (DMS), and ethyl methyl sulfide; and mixtures of a sulfide-based odorant with a thiol, a thioether, and the like. Examples of the odor component further include cyclohexene (CH) serving as a non-sulfur-based odorant that is a compound having no sulfur. In the embodiment, an example in which tetrahydrothiophene is used as the odor component will be described. Tetrahydrothiophene may be hereinafter referred to as THT.

### <Refrigerating machine oil>

Further, the air conditioner 1 encloses a refrigerating machine oil in the refrigerant circuit 10 together with the refrigerant and THT. The refrigerating machine oil is stored in the refrigerant circuit 10 mainly at the bottom of the compressor 21, and is caused to circulate to the compression element in the compressor 21 such that lubricity of a sliding unit can be maintained. Further, a portion of the refrigerating machine oil circulates in the refrigerant circuit 10 together with the refrigerant and THT. In other words, the refrigerating machine oil is mixed with the refrigerant and THT and used as a working fluid for the refrigeration apparatus. The proportion of the refrigerating machine oil in the total amount of the working fluid for the refrigerating apparatus is preferably 5% by mass or more and 60% by mass or less, and more preferably 10% by mass or more and 50% by mass or less.

Examples of the refrigerating machine oil include oxygen-containing synthetic oils (such as ester-based refrigerating machine oils and ether-based refrigerating machine oils) and hydrocarbon-based refrigerating machine oils. In particular, ester-based refrigerating machine oils and ether-based refrigerating machine oils are preferred from the viewpoint of miscibility with the refrigerant. For example, the refrigerating machine oil is a polyalkylene glycol oil (PAG oil). One kind of refrigerating machine oil may be used alone or two or more kinds of refrigerating machine oils may be used in combination.

In the air conditioner 1 configured as described above, when maintenance or inspection including removal of the apparatus, replacement or repair of pipes, or the like is performed, refrigerant extraction work of extracting the refrigerant enclosed in the refrigerant circuit 10 is performed by the operator. As described above, because the refrigerant having a low GWP value is applied, discharge of the refrigerant does not cause adverse effects on ozone layer depletion and global warming. In the refrigerant extraction work, the operator can discharge the refrigerant by collecting the refrigerant or discharging the refrigerant into the atmosphere. However, in addition to the refrigerant, the odor component for allowing a person to recognize the exposure of the refrigerant is also enclosed in the refrigerant circuit 10. If the odor component is discharged to the outside of the refrigerant circuit 10, inconveniences would occur, such as surrounding people who do not know the situation recognizing an abnormality and feeling discomfort.

### <Refrigerant Discharge Apparatus According to First Embodiment>

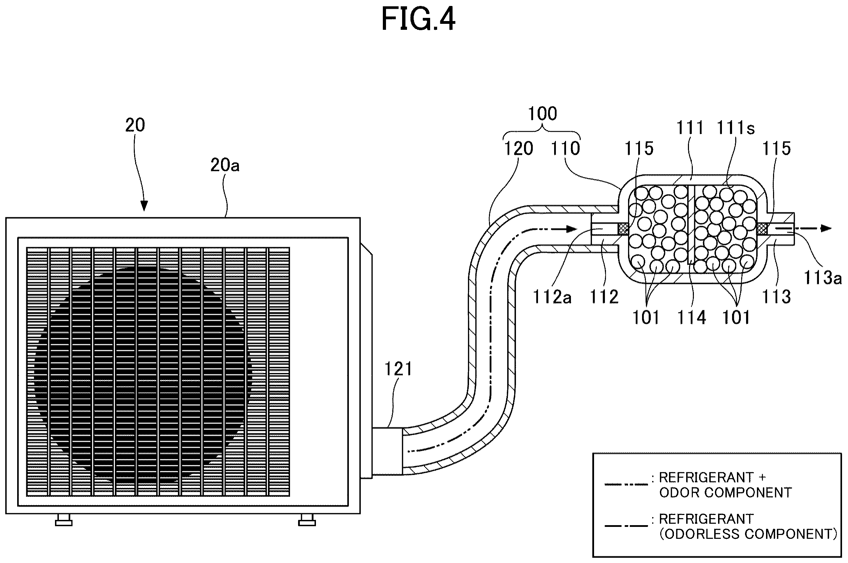

In view of the above, in refrigerant extraction work using the refrigerant discharge apparatus 100 according to a first embodiment, the refrigerant is discharged from the refrigerant circuit 10 to the atmosphere. Next, the refrigerant discharge apparatus 100 according to the first embodiment will be described with reference to FIG. 4.

The refrigerant discharge apparatus 100 is connected to the refrigerant circuit 10 by the operator, and causes the refrigerant and the odor component flowing out of the refrigerant circuit 10 to pass through a substance 101, remove or neutralize the odor component by the substance 101, and discharge the refrigerant and the odor component into the atmosphere. For this reason, the refrigerant discharge apparatus 100 includes a container 110 containing the substance 101 therein, and a hose 120 connecting between the gas service port 44 and the container 110.

The container 110 includes a main body 111 configured to accommodate the substance 101 that captures the odor component, an introduction port 112 configured to introduce the refrigerant and the odor component into the main body 111, and a discharge port 113 configured to discharge the refrigerant from the main body 111 to the outside. The main body 111, the introduction port 112, and the discharge port 113 are integrally formed with each other.

Examples of the substance 101 accommodated in the main body 111 include a solid deodorizing agent that physically adsorbs the odor component. Examples of the deodorizing agent include activated carbon, activated alumina, silica-alumina, silica gel, zeolite, and a metal-organic framework (MOF) containing a metal ion and an organic ligand. Alternatively, as the deodorizing agent, a combination of a plurality of any the above materials may be used. FIG. 4 illustrates an example in which a particulate deodorizing agent is used; however, the form of the deodorizing agent is not particularly limited, and the deodorizing agent may be in, for example, powder form, fiber form, sheet form, or the like. In the following, an example in which activated carbon is used as the substance 101 will be described as a representative example.

The main body 111 is formed in, for example, a substantially rectangular parallelepiped shape, and has an internal space 111s that can accommodate an appropriate amount of the substance 101. The main body 111 is formed of a resin material so as to have rigidity and stiffness. The main body 111 is placed on a placement member such as a table (not illustrated) in refrigerant extraction work, and thus the refrigerant can be continuously discharged. Alternatively, the main body 111 may have a fixing structure to be fixed to a wall surface (for example, a ceiling surface) of the housing 20a of the outdoor unit 20, and may be fixed to the housing 20a of the outdoor unit 20 in refrigerant extraction work.

An internal structure 114 may be provided inside the main body 111. The internal structure 114 can extend the discharge path of the refrigerant and the odor component from the introduction port 112 to the discharge port 113. As the internal structure 114, a structure in which the refrigerant and the odor component are retained by partitioning the interior space into a plurality of chambers as illustrated in FIG. 4, a labyrinth structure, or the like can be used.

The introduction port 112 protrudes from a left end surface that is a first end surface of the main body 111 in FIG. 4. The discharge port 113 protrudes from a right end surface that is a second end surface opposite to the first end surface of the main body 111 in FIG. 4. In other words, the introduction port 112 and the discharge port 113 are provided at different positions in the main body 111.

The introduction port 112 is formed in a cylindrical shape having a flow path 112a along the center axis. The flow path 112a on the base end side of the introduction port 112 communicates with the internal space 111s, and the flow path 112a on the protruding end side of the introduction port 112 communicates with the outside. The hose 120 is attached to the introduction port 112.

The discharge port 113 is also formed in a cylindrical shape having a flow path 113a along the center axis. The flow path 113a on the base end side of the discharge port 113 communicates with the internal space 111s, and the flow path 113a on the protruding end side of the discharge port 113 communicates with the outside. The introduction port 112 and the discharge port 113 may be formed in the same shape, and one of the ports may be connected to the hose 120 and used as an inlet-side port, and the other port may be used as a discharge-side port. Alternatively, the introduction port 112 may be formed in a shape distinguishable from the discharge port 113 by having a fixing structure or the like for fixing the hose 120.

Filters 115 such as metal meshes or resin meshes may be provided in the flow path 112a of the introduction port 112 and the flow path 113a of the discharge port 113. The filters 115 prevent the substance 101 from falling out of the container 110, while allowing gas to pass through. The filters 115 may be provided at respective positions adjacent to the ports within the internal space 111s of the main body 111.

Alternatively, a photocatalyst that converts the odor component into an odorless component may be used as the substance 101 accommodated in the main body 111. Examples of the photocatalyst include titanium oxide. When the photocatalyst is irradiated with light such as ultraviolet light, the photocatalyst generates hydroxy radicals and oxygen radicals, and these radicals react with the odor component, thereby converting the odor component into an odorless component. In this case, in addition to accommodating the photocatalyst substance 101, the main body 111 may include an irradiation unit (not illustrated) that irradiates the photocatalyst with light having an appropriate wavelength, and a power source that supplies power to the irradiation unit. Alternatively, the main body 111 may be configured to be transparent and the photocatalyst may be activated by sunlight.

The hose 120 connected to the container 110 includes an internal flow path 120a through which the refrigerant and the odor component flow. In the refrigerant extraction work, the operator connects one end of the hose 120 to the gas service port 44, and connects the other end of the hose 120 to the introduction port 112. The one end of the hose 120 is provided with a dedicated connector 121 that can be connected to the control valve connected to the gas service port 44. Further, the hose 120 is flexible, and the container 110 can be disposed at any position in the refrigerant extraction work.

### <Refrigerant Discharge Method>

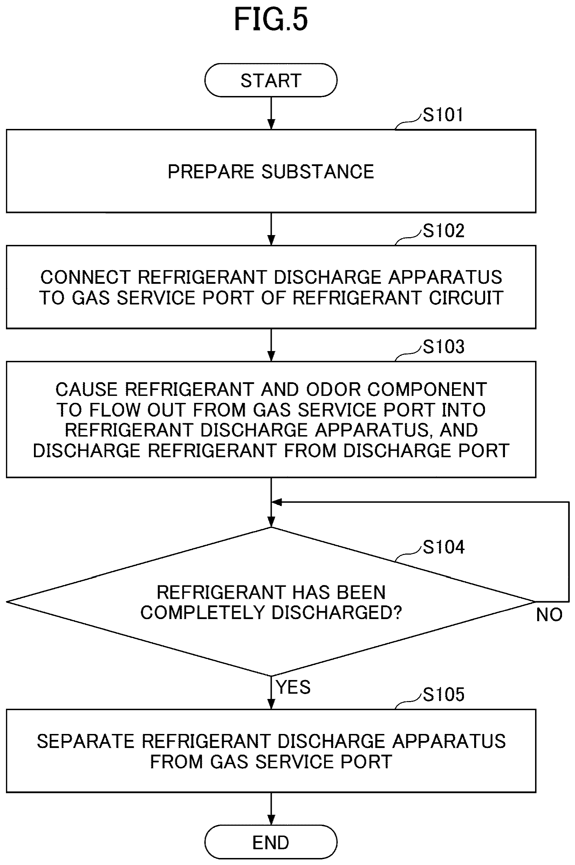

The refrigerant discharge apparatus 100 is basically configured as described above, and a refrigerant extraction work process, that is, a refrigerant discharge method will be described with reference to FIG. 5.

In the refrigerant discharge method, the operator first performs a step of preparing a substance 101 that is an adsorbent (step S101). For example, in the step of preparing the substance 101, a suction device (not illustrated) is connected to the main body 111 in which the substance 101 is accommodated, and the main body 111 is vacuumed. In this manner, components previously adsorbed by the substance 101 are separated and an odor component can be sufficiently adsorbed. As a method of removing components from the substance 101, any of various methods may be employed, such as heating the main body 111 to separate components from the substance 101. Alternatively, the substance 101 that can adsorb the odor component may be prepared and the empty main body 111 may be filled with the substance 101. Note that, if the refrigerant discharge apparatus 100 is new or has been used a small number of times, step S101 is not necessarily performed.

Next, the operator connects the refrigerant discharge apparatus 100 to the gas service port 44 of the refrigerant circuit 10 (step S102: connection step). At this time, the operator connects the connector 121 of the hose 120 coupled to the introduction port 112 of the container 110 to the control valve coupled to the gas service port 44. In other words, in step S101, the introduction port 112 of the refrigerant discharge apparatus 100 is connected to the gas service port 44 of the air conditioner 1. In response to the valve core 44b being pushed by the control valve, the gas service port 44 is opened, and gas can be discharged from the refrigerant circuit 10 to the hose 120.

Next, the operator operates the control valve to open the valve core 44b of the gas service port 44, causes a refrigerant and an odor component to flow out into the refrigerant discharge apparatus 100, and further causes the refrigerant to be discharged from the discharge port 113 of the refrigerant discharge apparatus 100 (step S103: discharge step). The refrigerant and the odor component in the refrigerant circuit 10 flow from the gas service port 44 through the hose 120 into the internal space 111s of the main body 111 via the introduction port 112 of the container 110. The odor component is adsorbed by the substance 101 accommodated in the inner space 111s while moving through the inner space 111s. Thus, the amount of the odor component mixed in the refrigerant is sufficiently reduced, and the refrigerant is discharged from the discharge port 113 of the container 110 to the outside of the main body 111 (into the atmosphere). Therefore, the refrigerant discharge apparatus 100 can discharge substantially odorless gas from the discharge port 113.

In the refrigerant extraction work, the container 110 is placed at an appropriate position, and the refrigerant in the refrigerant circuit 10 is continuously discharged through the refrigerant discharge apparatus 100. The operator determines whether the refrigerant has been completely discharged from the refrigerant circuit 10 (step S104). One method of monitoring whether the refrigerant has been completely discharged is for the operator to recognize the force of the refrigerant discharge from the discharge port 113 by sound, tactile sense, or the like. Alternatively, in the refrigerant extraction work, a compound gauge or the like may be interposed between the hose 120 and the container 110, and the operator may monitor the pressure of the refrigerant by the compound gauge or the like.

The air conditioner 1 may drive the compressor 21 to circulate the refrigerant in the refrigerant circuit 10 when the refrigerant is discharged from the refrigerant circuit 10. Thus, the refrigerant can be sufficiently discharged from the refrigerant circuit 10. In step S104, if the refrigerant is not completely discharged (NO in step S104), the discharge of the refrigerant is continued. Conversely, if the refrigerant has been completely discharged (YES in step S104), the process proceeds to step S105.

In step S105, the operator operates the control valve to stop the discharge of the refrigerant from the gas service port 44, and further separates the refrigerant discharge apparatus 100 and the control valve from the gas service port 44 (step S105). Accordingly, the refrigerant discharge method of discharging the refrigerant from the refrigerant circuit 10 into the atmosphere ends. The operator can perform maintenance or inspection such as removal of the apparatus, replacement, repair, or the like on the air conditioner 1 from which the refrigerant and the odor component have been removed.

As described above, the refrigerant discharge apparatus 100 and the refrigerant discharge method can capture the odor component enclosed in the refrigerant circuit 10 of the air conditioner 1 by the substance 101 accommodated in the main body 111 so as to suppress discharge of the odor component into the atmosphere. As used herein, the expression "capturing the odor component" includes concepts such as capturing and deodorizing the odor component, dissolving and removing the odor component, and neutralizing the odor component and making the odor component odorless by converting the odor component into another substance.

In the refrigerant extraction work, the refrigerant discharge apparatus 100 can prevent the odor component from being discharged into the atmosphere, thereby making it possible to avoid inconveniences such that surrounding people recognizing an abnormality and feeling discomfort. In particular, the operator can suppress discharge of the odor component by a simple operation of connecting the refrigerant discharge apparatus 100 to the gas service port 44. Accordingly, the refrigerant discharge apparatus 100 can be easily handled and the efficiency of the refrigerant extraction work can be facilitated.

The refrigerant discharge apparatus 100 and the refrigerant discharge method are not limited to those described in the above-described embodiment, and various modifications can be made to the above-described embodiment. For example, in the refrigerant discharge apparatus 100 according to the above-described embodiment, the container 110 is connected to the gas service port 44 via the hose 120, but the container 110 may be directly connected to the gas service port 44 without using the hose 120. In this case, the introduction port 112 of the container 110 may be provided with a connector that can be connected to the gas service port 44 or the control valve.

Further, the shape of the container 110 is not limited to that illustrated in FIG. 4, and the container 110 may be designed to have any shape. For example, the container 110 may be an elongated tube body having an internal flow path in which the substance 101 is accommodated, in other words, a discharge hose.

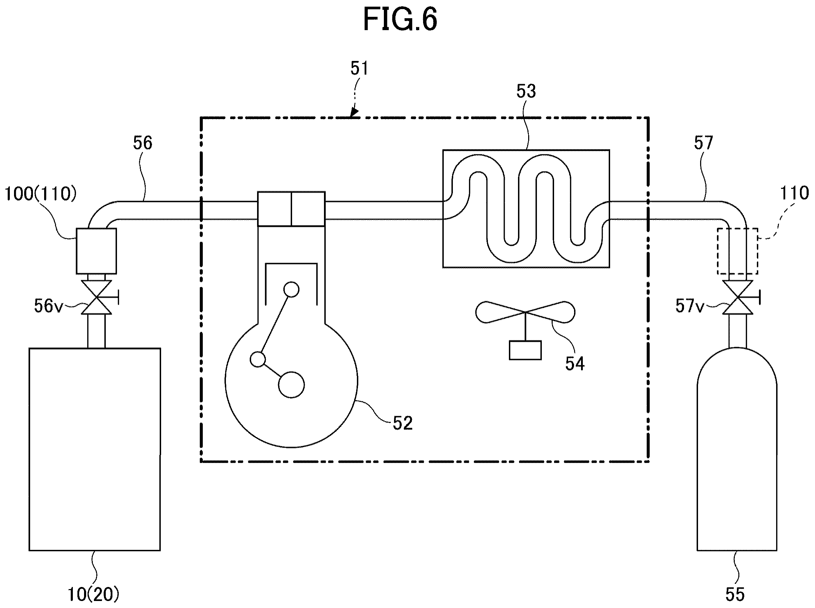

Refrigerant extraction work (a refrigerant discharge method) according to a modification illustrated in FIG. 6 differs from the refrigerant discharge method according to the first embodiment in that the refrigerant discharge apparatus 100 is applied to a refrigerant collection apparatus 50. The refrigerant collection apparatus 50 includes a collection unit 51 and a tank 55 connected to the downstream side of the collection unit 51. Further, the refrigerant collection apparatus 50 includes an upstream pipe 56 that connects the refrigerant circuit 10 (gas service port 44 (see FIG. 2)) and the collection unit 51, and a downstream pipe 57 that connects the collection unit 51 and the tank 55. The upstream pipe 56 includes an opening/closing valve 56v that opens and closes an internal flow path at an intermediate position. The downstream pipe 57 includes an opening/closing valve 57v that opens and closes an internal flow path at an intermediate position.

The collection unit 51 includes a housing, and the collection unit 51 includes a compressor 52, a heat exchanger 53, and a cooling fan 54 inside the housing. The compressor 52 is connected to the upstream pipe 56, and is also connected to the heat exchanger 53 via a pipe inside the housing. The compressor 52 takes in and compresses a refrigerant and an odor component in the refrigerant circuit 10 through the upstream pipe 56, and discharges the high-pressure refrigerant and odor component to the heat exchanger 53. Thus, the refrigerant collection apparatus 50 can take in the refrigerant until the refrigerant in the refrigerant circuit 10 is completely discharged. As will be described later, in a case where the refrigerant discharge apparatus 100 is disposed at the upstream pipe 56, the refrigerant containing almost no odor component can be compressed in the collection unit 51.

The heat exchanger 53 includes, for example, a meandering pipe and a plurality of fins provided outside the pipe. One end of the pipe of the heat exchanger 53 is connected to the pipe inside the housing, and the other end of the pipe of the heat exchanger 53 is connected to the downstream pipe 57. The cooling fan 54 cools the heat exchanger 53 by blowing air to the heat exchanger 53. In the heat exchanger 53, the refrigerant and the odor component in the pipe are cooled by the air from the cooling fan 54. A part or the entirety of the refrigerant cooled in the heat exchanger 53 is liquefied and discharged from the heat exchanger 53 to the downstream pipe 57. The odor component is discharged to the downstream pipe 57 together with the refrigerant by being liquefied or dissolved in the liquid refrigerant.

The tank 55 connected to the collection unit 51 collects the liquid refrigerant including the odor component, and the odor component itself. The tank 55 stores the refrigerant continuously conveyed from the collection unit 51 so as to store the refrigerant in the refrigerant circuit 10 in a liquid state. Note that the tank 55 may accommodate a gas refrigerant together with the liquid refrigerant.

The refrigerant discharge apparatus 100 installed in the refrigerant collection apparatus 50 as described above can adsorb the odor component discharged from the refrigerant circuit 10 by the substance 101 accommodated in the main body 111. For example, the refrigerant discharge apparatus 100 may be disposed at an intermediate position of the upstream pipe 56 (for example, on the downstream side of the opening/closing valve 56v). With this configuration, the refrigerant discharge apparatus 100 can capture the odor component before the refrigerant flows into the collection unit 51, and the refrigerant flows into the collection unit 51 with the amount of the odor component being reduced as much as possible. Alternatively, as indicated by a dashed line in FIG. 6, the refrigerant discharge apparatus 100 may be disposed at an intermediate position of the downstream pipe 57 (for example, on the upstream side of the opening/closing valve 57v). In this case, it is preferable that the substance 101 is selected from substances that can capture the odor component mixed in the liquid refrigerant. In other words, even in a case where the refrigerant is collected into the tank 55 of the refrigerant collection apparatus 50, the refrigerant discharge apparatus 100 captures the odor component before the odor component is collected into the tank 55 by being installed at an appropriate position. This can suppress leakage of the odor component to the outside of the refrigerant collection apparatus 50.

Note that the refrigerant collection apparatus 50 to which the refrigerant discharge method is applied is not limited to the configuration described above, and various configurations may be employed. For example, the tank 55 may be provided inside the housing of the collection unit 51 together with the compressor 52 and the heat exchanger 53.

In addition, as another refrigerant collection apparatus 50, a configuration in which a cooling mechanism (not illustrated) is provided in the tank 55 and a refrigerant in the tank 55 is changed to a liquid by the cooling mechanism may be employed. In this case, the tank 55 provided with the cooling mechanism may be directly connected to the refrigeration apparatus 1 (refrigerant circuit 10) without using the collection unit 51. The refrigerant discharge apparatus 100 can be installed in a pipe between the refrigerant circuit 10 and the tank 55 provided with the cooling mechanism in this case as well. The cooling mechanism is not particularly limited, and a mechanism including a cooler, an expansion valve, a radiator, a compressor, and the like can be adopted.

Further, as another refrigerant collection apparatus 50, a configuration may be employed in which circulation pipes are connected to both the gas service port 44 and the liquid service port of the refrigeration apparatus 1 (refrigerant circuit 10), and a liquid refrigerant is caused to flow into the tank 55 while causing a part of a gas refrigerant to be returned. In this case, the circulation pipe on the side where the gas refrigerant is returned may be provided with a collection unit (not illustrated) having a function as a pump that circulates the refrigerant and a function to return the gas to the refrigerant circuit 10 by reducing the pressure of the gas.

### <Refrigerant Discharge Apparatus According to Second Embodiment>

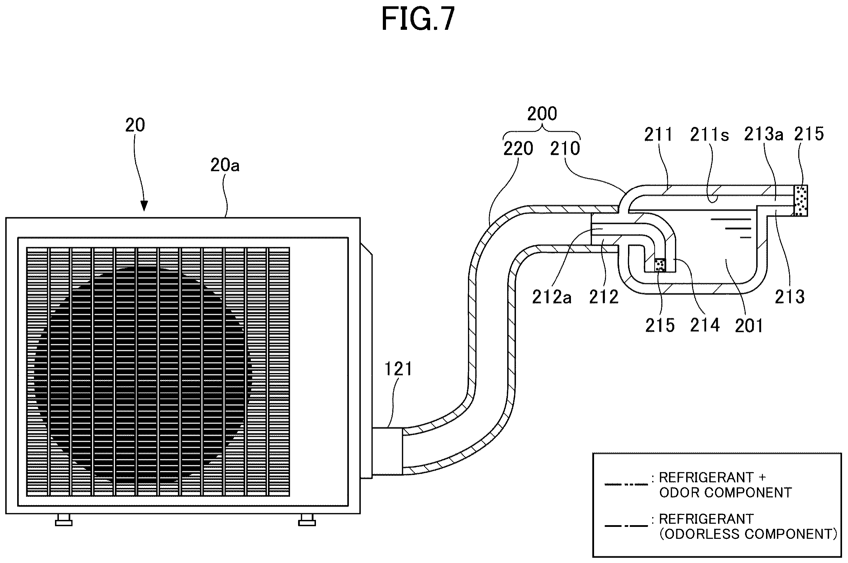

Next, a refrigerant discharge apparatus 200 according to a second embodiment will be described with reference to FIG. 7. The refrigerant discharge apparatus 200 according to the second embodiment differs from the refrigerant discharge apparatus 100 according to the first embodiment in that a liquid substance 201 is stored in a container 210. The other configurations are the same as those of the first embodiment.

Specifically, the refrigerant discharge apparatus 200 includes the container 210 storing the liquid substance 201, and a hose 220 connecting between the gas service port 44 and the container 210. The container 210 includes a main body 211, an introduction port 212 configured to introduce a refrigerant and an odor component into the main body 211, and a discharge port 213 configured to discharge the refrigerant from the main body 211 to the outside of the main body 211. The hose 220 may be the same as the hose 120 of the first embodiment.

Examples of the substance 201 stored in the main body 211 include a deodorizer that chemically changes the odor component by oxidation or the like. Examples of the deodorizer include an oxidizing agent, such as sodium hypochlorite that oxidizes the odor component, and a neutralizing agent that neutralizes the odor component. The odor component is discharged into the atmosphere together with the refrigerant in a state of being converted into an odorless component by the substance 201. The substance 201 may be a mixture of a plurality of kinds of components. Alternatively, the substance 201 may be a combination of a physical deodorizing agent and a chemical deodorizer. For example, a substance 101 in which a chemical deodorizer is added to or carried by a porous portion such as activated carbon may be used.

The main body 211 is formed in, for example, a substantially rectangular parallelepiped shape having an internal space 211s. An appropriate amount of the substance 201 is stored in the internal space 211s of the main body 211 such that the substance 201 stably reacts with the odor component. An internal structure 214 for facilitating the reaction between the substance 201 and the refrigerant and odor component may be provided inside the main body 211. Examples of the internal structure 214 include a structure for guiding the refrigerant and the odor component to a bottom portion of the main body 211 as illustrated in FIG. 7, a structure for extending a flow path, a structure for stirring the odor component, a structure for supplying electricity, and a heating structure.

Filters 215 may be provided in a flow path 212a of the introduction port 212 and a flow path 213a of the discharge port 213. The filters 215 may be selected from appropriate filters that can block a liquid from passing therethrough while allowing gas to pass therethrough. The filters 215 may be provided at respective positions adjacent to the ports within the internal space 211s.

Alternatively, the substance 201 stored in the main body 211 is not limited to a substance that chemically reacts with the odor component. Examples of another substance 201 include a substance, such as a liquid, having a melting point of -20°C or lower and a boiling point of 50°C or higher and capable of dissolving the odor component. As the substance 201, a liquid whose Hansen solubility parameter (HPS) distance to the odor component is 10 or less may be selected. Hansen solubility parameters are values used to predict the solubility of substances, and are expressed as a three-dimensional vector consisting of three parameters, that is, a dispersion term dD, a polar term dP, and a hydrogen bond term dH. Hereinafter, the Hansen solubility parameter distance is also referred to as an HPS distance.

The "HPS distance" is the distance between HSP values of two substances. The more similar the vectors are, in other words, the closer the distances are, the more easily the substances are dissolved. That is, in a case where a substance 201 that dissolves an odor component is applied, it can be said that a substance having a similar vector and close HPS values may be selected by using HSP values [dD, dP, dH] of the odor component as an index.

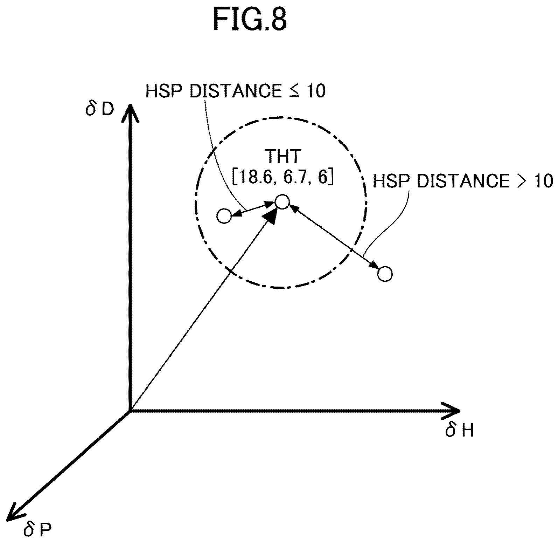

As illustrated in FIG. 8, in a case where THT is applied as the odor component, HPS values [dD, dP, dH] of THT are [18.6, 6.7, 6]. Examples of a substance having an HPS distance of 10 or less with respect to the above HPS values include dimethoxybenzene(m-dimethoxybenzene), phenyl isocyanate, 1,2-dibromo-3-chloropropane, 4-fluoroanisole (p-fluoroanisole), methyl thiomethyl mercaptan, and 2-ethylhexyl diphenyl phosphate (phosphoric acid, 2-ethylhexyl diphenyl ester).

The refrigerant discharge apparatus 200 according to the second embodiment is basically configured as described above. The refrigerant discharge apparatus 200 discharges the refrigerant in the refrigerant circuit 10 into the atmosphere by using the same refrigerant extraction work process (refrigerant discharge method) as the refrigerant discharge apparatus 100 according to the first embodiment. That is, the refrigerant discharge apparatus 200 and the refrigerant discharge method can also capture the odor component enclosed in the refrigerant circuit 10 of the air conditioner 1 by the liquid substance 201 in the main body 211 so as to suppress discharge of the odor component into the atmosphere.

The refrigerant discharge apparatus 200 according to the second embodiment may also be installed in the refrigerant collection apparatus 50 that collects the refrigerant into the tank 55 as illustrated in FIG. 6. In this case as well, the refrigerant discharge apparatus 200 can stably collect the refrigerant, by capturing the odor component by the substance 201 such that the odor component is less likely to be included in the refrigerant.

### <Refrigerant Discharge Apparatus According to Third Embodiment>

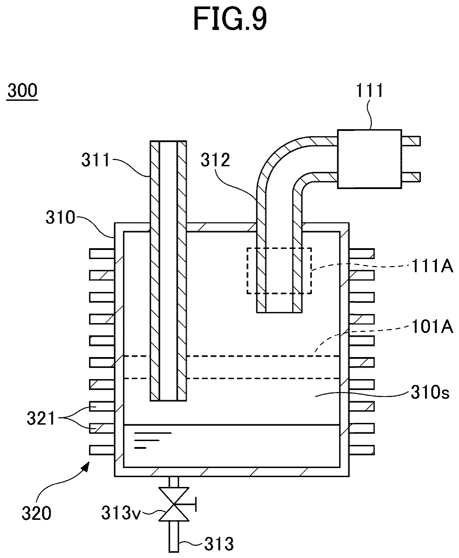

Next, a refrigerant discharge apparatus 300 according to a third embodiment will be described with reference to FIG. 9. The refrigerant discharge apparatus 300 according to the third embodiment differs from the above-described refrigerant discharge apparatuses 100 and 200 in that the refrigerant discharge apparatus 300 includes a separation container 310 that is a separation unit.

Specifically, the refrigerant discharge apparatus 300 includes a first port 311 and a second port 312, which are connected to the ceiling of the separation container 310, and a drain port 313, which is connected to the bottom of the separation container 310. The first port 311 is connected to the gas service port 44 of the refrigerant circuit 10 via a hose 120 (see FIG. 4) or the like. The second port 312 is connected to the outside, the refrigerant collection apparatus 50 (see FIG. 6), or the like. In the third embodiment, a main body 111 accommodating a substance 101 that captures (adsorbs) an odor component is provided for the second port 312. In other words, the refrigerant discharge apparatus 300 is configured such that the first port 311 located on the upstream side relative to the main body 111 corresponds to an introduction port, and the separation container 310 is provided between the first port 311 and the main body 111. Further, in the third embodiment, a portion of the second port 312, which is located on the downstream side relative to the main body 111, corresponds to a discharge port.

The separation container 310 separates a refrigerant, an odor component, and a refrigerating machine oil, which have flowed into the separation container 310, into liquid and gas. The separation container 310 separates the refrigerant, the odor component, and the refrigerating machine oil, which have flowed into the separation container 310 through the first port 311, into the refrigerating machine oil mainly including the odor component and the refrigerant mainly including the odor component. Example of a separation method in the separation container 310 includes a method using a density difference between gas and liquid.

The separation container 310 has an internal space 310s that can store the refrigerating machine oil therein. The first port 311 connected to the separation container 310 extends vertically downward from the ceiling of the separation container 310 within the internal space 310s. The first port 311 has an opening through which the refrigerant, the odor component, and the refrigerating machine oil flow out. The opening of the first port 311 is located at a predetermined height above the bottom of the separation container 310.

The separation container 310 can include the drain port 313 at the bottom of the separation container 310. The drain port 313 of the separation container 310 is a port through which the refrigerating machine oil accumulated in the internal space 310s is discharged from the separation container 310. The drain port 313 includes a drain valve 313v that opens and closes a flow path in the port. The drain value 313v is normally closed, and when a certain amount of refrigerating machine oil is accumulated in the separation container 310, the drain valve 313v is opened by the operator and is discharged to the outside of the separation container 310 (for example, into a container that collects the refrigerating machine oil).

Further, the refrigerant discharge apparatus 300 includes a cooling unit 320 on an outer peripheral portion of the separation container 310. The cooling unit 320 cools the refrigerant, the odor component, and the refrigerating machine oil that have flowed into the separation container 310. The cooling unit 320 may cool the refrigerant, the odor component, and the refrigerating machine oil so as to liquefy the odor component.

The cooling unit 320 according to the embodiment is a plurality of fins 321 provided on the outer peripheral surface of the separation container 310, and cools the refrigerant, the odor component, and the refrigerating machine oil by dissipating the heat of the separation container 310 from each of the fins 321. Note that the cooling unit 320 may include a cooling fan or the like that blows air to the fins 321. The cooling unit 320 is not limited to an air-cooling type cooling unit such as the fins 321 and the cooling fan, and may employ any of various configurations that allow the inside of the separation container 310 to be cooled (for example, a water-cooling type cooling unit that circulates cooling water or immerses the separation container 310 in ice water may be employed).

The refrigerant discharge apparatus 300 described above performs separation by a density difference between the refrigerant, which is a gas, and the refrigerating machine oil, which is a liquid (mist). The refrigerant, the odor component, and the refrigerating machine oil flow into the separation container 310 through the first port 311. When the refrigerating machine oil moves through the first port 311, the refrigerating machine oil adheres to the inner wall of the first port 311, forms droplets of sufficient size, and falls to the bottom of the separation container 310. The refrigerating machine oil flowing into the separation container 310 from the first port 311 is accumulated in a lower portion of the internal space 310s by its own weight. The refrigerating machine oil forms droplets as a result of the refrigerating machine oil being cooled by the cooling unit 320 and the temperature of the refrigerating machine oil being decreased. In addition, the refrigerating machine oil is more likely to dissolve the odor component as the temperature of the refrigerating machine oil decreases. That is, a part of the odor component liquefied by the cooling unit 320 is dissolved in the refrigerating machine oil in the form of droplets. In this manner, a portion of the odor component is mixed with the refrigerating machine oil, and thus the amount of the odor component included in the refrigerant in the separation container 310 is reduced.

The separation container 310 is connected to the second port 312. The gas including the refrigerant separated in the separation container 310 is discharged to the outside, the refrigerant collection apparatus 50, or the like via the second port 312. However, a portion of the liquid including the refrigerating machine oil in the form of mist and the like may also flow into the second port 312. The second port 312 includes a first portion and a second portion. The first portion of the second port 312 is a portion extending vertically downward from the ceiling of the separation container 310 toward the internal space 310s. The second portion of the second port 312 is a portion other than the first portion of the second port 312.

The main body 111 is provided at the second portion of the second port 312. The refrigerant and the odor component flowing out of the separation container 310 are captured by the substance 101 accommodated in the main body 111. Therefore, the refrigerant discharge apparatus 300 can discharge the refrigerant with a reduced amount of the odor component from the downstream side (discharge port) of the second port 312.

In other words, a refrigerant discharge method according to the third embodiment simultaneously performs a cooling step of cooling a refrigerant, an odor component, and a refrigerating machine oil, and a separation step of separating a gas including the refrigerant and the odor component from the refrigerating machine oil. Further, in the refrigerant discharge method, after the cooling step and the separation step are performed, an adsorption step of adsorbing, by a substance, the odor component included in the refrigerant or the refrigerating machine oil is performed. This makes it possible to more sufficiently remove the odor component from the refrigerant.

Further, in the case of the main body 111 provided at the second portion of the second port 312, the main body 111 itself is easily replaced or the substance 101 in the main body 111 is easily replaced. In addition, the refrigerant and the odor component flow into the main body 111 after being sufficiently cooled by the cooling unit 320, and thus a larger amount of the odor component can be captured. Note that as the main body 111 according to the third embodiment, the main body 111 according to the first embodiment or the main body 211 according to the second embodiment may be installed.

Further, the position of the main body 111 (or the substance 101) in the refrigerant discharge apparatus 300 is not limited to the above-described position. For example, as indicated by a dashed line in FIG. 9, a main body 111A may be provided at the first portion of the second port 312. Alternatively, the separation container 310 may contain a mesh-like, porous-like, or fiber-like (nonwoven or the like) substance 101A so as to partition the internal space 310s. If the substance 101A is located inside the separation container 310, the separation container 310 itself corresponds to the main body 111 according to the first embodiment. Further, the refrigerant discharge apparatus 300 may be configured to include main bodies 111 (or substances 101) at a plurality of positions such as inside the separation container 310, at the second port 312, and the like.

Further, the refrigerant discharge method is not limited to the above-described refrigerant discharge method in which the adsorption step is performed after the separation step and the cooling step are performed in advance. For example, in a refrigerant discharge apparatus that does not include the cooling unit 320, the refrigerant discharge method may be performed such that the adsorption step is performed after the separation step is performed. The refrigerant with a small amount of the odor component can be discharged in this case as well. This is because the odor component is separated from the gaseous refrigerant in the separation container 310 and is further captured by the substance 101. In the separation container 310, because the liquid odor component is included in refrigerating machine oil, the vapor pressure of the odor component is reduced. As a result, the saturated vapor pressure of the odor component decreases, and the amount of the odor component in the gas phase is reduced. This enables the separation of the odor component from the gaseous refrigerant. Further, for example, the refrigerant discharge method may be performed such that the cooling step is performed first and subsequently the adsorption step is performed. The refrigerant with a small amount of the odor component can be discharged in this case as well. This is because the temperature of the refrigerant is reduced in the cooling step, and thus a larger amount of the odor component can be captured in the adsorption step. Further, for example, in a refrigerant discharge apparatus in which the first port 311 is provided with the cooling unit 320, the refrigerant discharge method may be performed such that the cooling step is performed first, the separation step is performed next in the separation container 310, and the adsorption step is performed last. Similar to the third embodiment, the refrigerant with a small amount of the odor component can be discharged in this case as well. Alternatively, in a refrigerant discharge apparatus in which the second port 312 is provided with the cooling unit 320, the refrigerant discharge method may be performed such that the separation step is performed in the separation container 310, the cooling step is performed next, and the adsorption step is performed last.

Further, a separation method by the separation unit is not limited to the above, and a centrifugal separation method, a filter separation method, a surface tension separation method, or the like may be employed. For example, in the centrifugal separation method, a portion of the first port 311 extending vertically downward from the ceiling of the separation container 310 is disposed along the circumference of the inner circle of the separation container 310, and a refrigerant, an odor component, and a refrigerating machine oil flowing out of the first port 311 are brought into contact with the inner wall surface of the separation container 310 so as to facilitate separation. Further, for example, in the filter separation method, a filter that catches a refrigerating machine oil is provided in the first port 311, and oil droplets collected in the filter are caused to fall down. Alternatively, in the surface tension separation method, a refrigerant, an odor component, and refrigerating machine oil are ejected so as to hit against a wall portion (not illustrated) of the separation container 310, thereby increasing the size of oil droplets of the refrigerating machine oil and causing the oil droplets to fall down.

### <Aspects and Effects of Present Disclosure>

The embodiments disclosed above have, for example, the following aspects and effects.

A first aspect of the present disclosure is a refrigerant discharge apparatus 100, 200, 300 for discharge of a refrigerant from a refrigeration apparatus 1, the refrigeration apparatus 1 including a refrigerant circuit 10 that encloses the refrigerant and an odor component and circulates the refrigerant and the odor component. The refrigerant discharge apparatus includes: a main body 111, 211 configured to accommodate a substance 101, 201 that captures the odor component; an introduction port 112, 212, 311 connected to the main body 111, 211, and configured to introduce, into the main body 111, 211, the refrigerant and the odor component discharged from the refrigeration apparatus 1; and a discharge port 113, 213, 312 provided at a position different from that of the introduction port 112, 212, 311 in the main body 111, 211, and configured to discharge the refrigerant from the main body 111, 211 to an outside of the main body 111, 211.

According to the above, the refrigerant discharge apparatus 100, 200, 300 can introduce the refrigerant and the odor component from the refrigeration apparatus 1 into the main body 111, 211, and stably capture the odor component with the substance 101, 201 in the main body 111, 211. Accordingly, the refrigerant discharge apparatus 100, 200, 300 can suppress discharge of the odor component when the refrigerant is discharged from the refrigeration apparatus 1. As a result, it is possible to prevent diffusion of the odor component into the surroundings during refrigerant extraction work, thereby avoiding inconveniences such as surrounding people recognizing an abnormality and feeling discomfort.

Further, the introduction port 112, 212, 311 is connected to a service port (gas service port 44) of the refrigeration apparatus 1.

Accordingly, an operator can easily attach the refrigerant discharge apparatus 100, 200, 300 to the refrigeration apparatus 1 and cause the refrigerant and the odor component enclosed in the refrigerant circuit 10 to flow into the main body 111, 211.

Further, the refrigerant discharge apparatus includes a hose 120 connecting between the introduction port 112, 212, 311 and the service port (gas service port 44).

Accordingly, the degree of freedom in placing the main body 111, 211 during the refrigerant extraction work can be increased, and thus the operator can place the main body 111, 211 at an appropriate position.

Further, the refrigerant discharge apparatus includes a tank 55 connected to the discharge port 113, 213, 312 and configured to collect the refrigerant discharged from the discharge port 113, 213, 312.

Accordingly, discharge of the refrigerant in the refrigeration apparatus 1 to the atmosphere can be reduced in the refrigerant extraction work.

Further, the refrigerant discharge apparatus includes a separation unit 310 and a cooling unit 320 provided either as the main body 111, 211 or between the introduction port 311 and the main body 111, 211, or both. The refrigerant, the odor component, and a refrigerating machine oil flow into the separation unit 310, and the separation unit 310 separates the refrigerant, the odor component, and the refrigerating machine oil into liquid and gas. The cooling unit 320 cools the refrigerant, the odor component, and the refrigerating machine oil.

Accordingly, even when the refrigerant, the odor component, and the refrigerating machine oil are discharged, the refrigerant discharge apparatus 300 can separate the refrigerating machine oil and discharge the refrigerating machine oil from the refrigerant discharge apparatus 100, 200, 300.

Further, the substance 101 is an adsorbent configured to adsorb the odor component.

Accordingly, the substance 101 can stably adsorb the odor component flowing into the main body 111. Further, the operator can easily handle the refrigerant discharge apparatus 100, and the efficiency of the refrigerant extraction work can be facilitated.

Further, the substance 101 is a catalyst that converts the odor component into an odorless component.

Accordingly, the substance 101 can stably convert the odor component, which has flowed into the main body 111, into an odorless component.

Further, the substance 201 is a liquid stored in the main body 211, and the odor component passes through the liquid by being introduced from the introduction port 212.

Accordingly, the refrigerant discharge apparatus 200 can sufficiently capture the odor component while the odor component passes through the substance 201 that is a liquid.

Further, the substance 201 is an oxidizing agent that oxidizes the odor component so as to convert the odor component into an odorless component.

Accordingly, the substance 201 can stably convert the odor component, which has flowed into the main body 211, into an odorless component.

Further, a Hansen solubility parameter distance (HSP distance) between the substance 201 and the odor component is 10 or less.

Accordingly, the refrigerant discharge apparatus 200 can sufficiently dissolve the odor component in the substance 201 that is a liquid, and can prevent the odor component from being discharged from the substance 201.

Further, the refrigerant is a highly flammable refrigerant.

Accordingly, the refrigerant discharge apparatus 100, 200, 300 can discharge the highly flammable refrigerant with a reduced amount of the odor component into the atmosphere, and the operator can safely perform the refrigerant extraction work.

Further, the refrigerant is a refrigerant containing a hydrocarbon as a main component.

Accordingly, even when the refrigerant is discharged into the atmosphere in the refrigerant extraction work, environmental pollution can be avoided.

Further, the odor component contains, as a component, one or more of tetrahydrothiophene, dimethyl sulfide, ethyl methyl sulfide, and cyclohexene.

Accordingly, the odor component has excellent odor quality and odor threshold as compared to other odor components. In addition, because the odor component is chemically stabilized, the composition of the odor component can be maintained well in the refrigerant circuit 10.

A second aspect of the present disclosure is a refrigerant discharge method of discharging a refrigerant from a refrigeration apparatus 1, the refrigeration apparatus 1 including a refrigerant circuit 10 that encloses the refrigerant and an odor component and circulates the refrigerant and the odor component. The refrigerant discharge method includes: a connection step of directly or indirectly connecting an introduction port 112, 212, 311 of a refrigerant discharge apparatus 100, 200, 300 to the refrigeration apparatus 1; and a discharge step of introducing the refrigerant and the odor component from the refrigeration apparatus 1 into a main body 111, 211 of the refrigerant discharge apparatus 100, 200, 300 through the introduction port 112, 212, 311, capturing the odor component by a substance 101, 201 accommodated in the main body 111, 211, and subsequently discharging the refrigerant to an outside of the main body 111, 211 from a discharge port 113, 213, 312 provided at a position different from that of the introduction port 112, 212, 311 in the main body 111, 211.

According to the above, the refrigerant discharge method can suppress discharge of the odor component when the refrigerant is discharged from the refrigeration apparatus 1.

A third aspect of the present disclosure is a refrigerant discharge method of discharging a refrigerant from a refrigeration apparatus 1, the refrigeration apparatus 1 including a refrigerant circuit 10 that encloses the refrigerant, an odor component, and refrigerating machine oil and circulates the refrigerant and the odor component. The refrigerant discharge method includes: in discharging the refrigerant, the odor component, and the refrigerating machine oil from the refrigeration apparatus 1, a cooling step of cooling the refrigerant, the odor component, and the refrigerating machine oil; a separation step of separating a gas including the refrigerant and the odor component from the refrigerating machine oil; and an adsorption step of adsorbing, by a substance, the odor component included in the refrigerant or the refrigerating machine oil after at least one of the cooling step or the separation step is performed.

According to the above, the refrigerant discharge method according to the third aspect can suppress discharge of the odor component when the refrigerant is discharged from the refrigeration apparatus 1.

The refrigeration apparatus 1 according to the embodiments disclosed herein is exemplary in all respects and is not restrictive. The embodiments can be modified and improved in various forms without departing from the scope of the appended claims. The matters described in the above plurality of embodiments can have other configurations without contradiction, and can be combined without contradiction.

For example, the refrigeration apparatus 1 may be an apparatus that circulates a refrigerant other than the air conditioner 1. As an example, the refrigeration apparatus 1 can be applied to a cooling apparatus that cools a refrigerator or a freezer, a chiller unit, a heat-pump water heater, and the like.

This application is based on and claims priority to Japanese Patent Application No. 2024-057725, filed on March 29, 2024, the entire contents of which are incorporated herein by reference.

### DESCRIPTION OF THE REFERENCE NUMERALS

1 refrigeration apparatus (air conditioner)
10 refrigerant circuit
44 gas service port
100, 200, 300 refrigerant discharge apparatus
101, 201 substance
111, 211 main body
112, 212, 311 introduction port
113, 213, 312 discharge port
120 hose

## Claims

1. A refrigerant discharge apparatus (100, 200, 300) for discharge of a refrigerant from a refrigeration apparatus (1), the refrigeration apparatus (1) including a refrigerant circuit (10) that encloses the refrigerant and an odor component and circulates the refrigerant and the odor component, the refrigerant discharge apparatus comprising:
a main body (111, 211) configured to accommodate a substance (101, 201) that captures the odor component;
an introduction port (112, 212, 311) connected to the main body (111, 211), and configured to introduce, into the main body (111, 211), the refrigerant and the odor component discharged from the refrigeration apparatus (1); and
a discharge port (113, 213, 312) provided at a position different from that of the introduction port (112, 212, 311) in the main body (111, 211), and configured to discharge the refrigerant from the main body (111, 211) to an outside of the main body (111, 211).

2. The refrigerant discharge apparatus according to claim 1, wherein the introduction port (112, 212, 311) is connected to a service port (44) of the refrigeration apparatus (1).

3. The refrigerant discharge apparatus according to claim 2, comprising:
a hose (120) connecting between the introduction port (112, 212, 311) and the service port (44).

4. The refrigerant discharge apparatus according to any one of claims 1 to 3, comprising:
a tank (55) connected to the discharge port (113, 213, 312) and configured to collect the refrigerant discharged from the discharge port (113, 213, 312).

5. The refrigerant discharge apparatus according to any one of claims 1 to 4, comprising:
a separation unit (310) and a cooling unit (320) provided either as the main body (111, 211) or between the introduction port (112, 212, 311) and the main body (111, 211), or both, wherein
the refrigerant, the odor component, and a refrigerating machine oil flow into the separation unit (310), and the separation unit (310) separates the refrigerant, the odor component, and the refrigerating machine oil into liquid and gas, and
the cooling unit (320) cools the refrigerant, the odor component, and the refrigerating machine oil.

6. The refrigerant discharge apparatus according to any one of claims 1 to 5, wherein the substance (101) is an adsorbent configured to adsorb the odor component.

7. The refrigerant discharge apparatus according to any one of claims 1 to 5, wherein the substance (101) is a catalyst that converts the odor component into an odorless component.

8. The refrigerant discharge apparatus according to any one of claims 1 to 5, wherein
the substance (201) is a liquid stored in the main body (211), and
the odor component passes through the liquid by being introduced from the introduction port (212).

9. The refrigerant discharge apparatus according to claim 8, wherein the substance (201) is an oxidizing agent that oxidizes the odor component so as to convert the odor component into an odorless component.

10. The refrigerant discharge apparatus according to claim 8, wherein a Hansen solubility parameter distance between the substance (201) and the odor component is 10 or less.

11. The refrigerant discharge apparatus according to any one of claims 1 to 10, wherein the refrigerant is a highly flammable refrigerant.

12. The refrigerant discharge apparatus according to any one of claims 1 to 10, wherein the refrigerant is a refrigerant containing a hydrocarbon as a main component.

13. The refrigerant discharge apparatus according to claim 12, wherein the odor component contains, as a component, one or more of tetrahydrothiophene, dimethyl sulfide, ethyl methyl sulfide, and cyclohexene.

14. A refrigerant discharge method of discharging a refrigerant from a refrigeration apparatus (1), the refrigeration apparatus (1) including a refrigerant circuit (10) that encloses the refrigerant and an odor component and circulates the refrigerant and the odor component, the refrigerant discharge method comprising:
a connection step of directly or indirectly connecting an introduction port (112, 212, 311) of a refrigerant discharge apparatus (100, 200, 300) to the refrigeration apparatus (1); and
a discharge step of introducing the refrigerant and the odor component from the refrigeration apparatus (1) into a main body (111, 211) of the refrigerant discharge apparatus (100, 200, 300) through the introduction port (112, 212, 311), capturing the odor component by a substance (101, 201) accommodated in the main body (111, 211), and subsequently discharging the refrigerant to an outside of the main body (111, 211) from a discharge port (113, 213, 312) provided at a position different from that of the introduction port (112, 212, 311) in the main body (111, 211).

15. A refrigerant discharge method of discharging a refrigerant from a refrigeration apparatus (1), the refrigeration apparatus (1) including a refrigerant circuit (10) that encloses the refrigerant, an odor component, and refrigerating machine oil and circulates the refrigerant and the odor component, the refrigerant discharge method comprising:
in discharging the refrigerant, the odor component, and the refrigerating machine oil from the refrigeration apparatus (1), a cooling step of cooling the refrigerant, the odor component, and the refrigerating machine oil;
a separation step of separating a gas including the refrigerant and the odor component from the refrigerating machine oil; and
an adsorption step of adsorbing, by a substance (101, 201), the odor component included in the refrigerant or the refrigerating machine oil after at least one of the cooling step or the separation step is performed.
